# EUROPÄISCHE PATENTSCHRIFT

(11) **EP 1 581 361 B1**
(45) Veröffentlichungstag und Bekanntmachung des Hinweises auf die Patenterteilung: **09.08.2006**
(21) Anmeldenummer: 03779684.4
(22) Anmeldetag: 03.11.2003
(51) Int. Cl.: B23P 6/04

(54) **VERFAHREN ZUR HERSTELLUNG EINES BAUTEILS**
METHOD FOR PRODUCTION OF A COMPONENT
PROCEDE DE PRODUCTION D'UN ELEMENT CONSTITUTIF

(30) Priorität: 02.12.2002 DE 10256414
(43) Veröffentlichungstag der Anmeldung: 05.10.2005
(73) Patentinhaber: SIEMENS AKTIENGESELLSCHAFT, 80333 München (DE)
(72) Erfinder: MAUSSNER, Gerd, 90480 Nürnberg (DE); NEBER, Gerd, 90522 Oberasbach (DE); OTT, Michael, 45478 Mülheim an der Ruhr (DE)
(86) Internationale Anmeldenummer: PCT/DE2003/003639
(87) Internationale Veröffentlichungsnummer: WO 2004/050294

(56) Entgegenhaltungen:
- EP-A- 0 676 259
- WO-A-97/21516
- US-B1- 6 173 491

## Beschreibung

Die Erfindung betrifft ein Verfahren zur Herstellung eines Bauteils gemäß Oberbegriff des Anspruchs 1. Ein solches Verfahren ist aus der US-B-6173491, die als der nächstliegende Stand der Technik gesehen wird, bekannt. Bei der Herstellung von Bauteilen müssen oft noch weitere Teile mit dem Bauteil fest verbunden werden.

Ein solches Verfahren ist beispielsweise aus der EP 868 253 B1 bekannt. Bei diesem Verfahren wird ein Füllkörper innerhalb einer Nut mit dem Bauteil fest verbunden. Die Verbindung des Füllkörpers mit dem Bauteil in der Nut ist jedoch nicht ausreichend genug, da das Lot bzw. die Verbindungsschicht zwischen dem Füllkörper und dem Bauteil nicht gleichmäßig oder unvollständig ist.

Es ist daher Aufgabe der Erfindung, dieses Problem zu Überwinden.

Die Aufgabe wird gelöst durch ein Verfahren gemäß Anspruch 1.

In den Unteransprüchen sind weitere vorteilhafte Maßnahmen aufgelistet. Die in den Unteransprüchen aufgelisteten Maßnahmen können vorteilhafterweise miteinander kombiniert werden.

Die Erfindung ist im Folgenden anhand von Figuren näher erläutert.

Es zeigen
Figur 1, 2, 3 und 4 mehrere Verfahrensschritte des erfindungsgemäßen Verfahrens,
Figur 5 eine Aussicht auf ein Bauteil, das mittels des erfindungsgemäßen Verfahrens hergestellt wird, und
Figur 6 ein Bauteil nach Fertigstellung mit dem erfindungsgemäßen Verfahren.

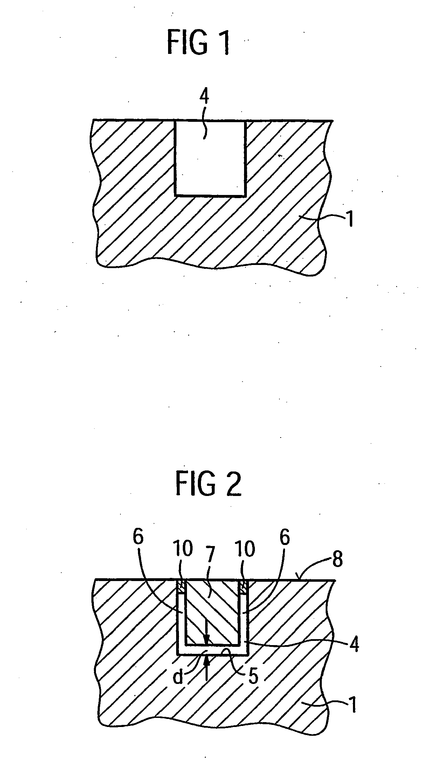

Figur 1 zeigt ein Bauteil 1 in einem ersten Verfahrensschritt.

Das Bauteil 1 weist beispielsweise eine Nut 4 auf. Das Bauteil 1 ist beispielsweise ein Gasturbinenbauteil, wie zum Beispiel eine Turbinenschaufel. Die Turbinenschaufel weist nach dem Einsatz Risse auf, die repariert werden sollen. Ein solches Verfahren ist in der EP 868 253 B1 näher erläutert. Bei diesem Verfahren wird die Nut 4 wie in Figur 1 hergestellt oder eine entsprechende Nut 4 ist vorhanden.

Figur 2 zeigt das Bauteil 1 in einem weiteren Verfahrensschritt des erfindungsgemäßen Verfahrens.

Ein Füllkörper 7 soll mit dem Bauteil 1 auf einer Oberfläche 8 des Bauteils 1 oder in einer Nut 4 (Fig. 2) fest verbunden werden.

Ein Abstand d des Füllkörpers 7 zu dem Boden 5 in der Nut 4 kann null oder größer null sein.

In einem Spalt 6, der zwischen dem Füllkörper 7 und dem Bauteil 1 in der Nut 4 vorhanden ist, ist bspw. zumindest ein Abstandshalter 10 bspw. n der Nähe der Oberfläche 8 des Bauteils 1 angeordnet. So kann ein gleichmäßiger Spalt auf beiden Seiten zwischen dem Füllkörper 7 und dem Bauteil 1 in der Nut 4 erreicht werden.

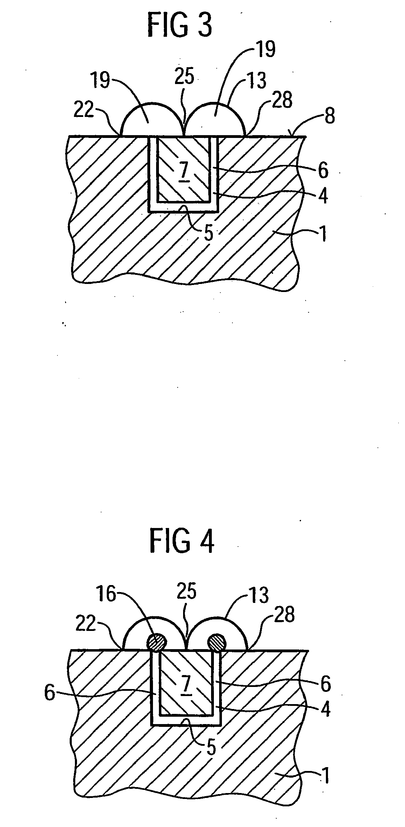

Figur 3 zeigt das Bauteil 1 in einem weiteren Verfahrensschritt des erfindungsgemäßen Verfahrens.

Um den Füllkörper 7 während eines Befestigungsverfahrens zur Befestigung des Füllkörpers 7 mit dem Bauteil 1 in einer festen Position zu halten, wird eine Halterung 13 verwendet, die den Füllkörper 4 mit dem Bauteil 1 zumindest zeitweise während eines Befestigungsverfahrens verbindet.

Die Halterung 13 weist zumindest einen ersten Halterungspunkt 22 auf der Oberfläche 8 des Bauteils 1 und zumindest einen zweiten Halterungspunkt 25 auf dem Füllkörper 7 auf. Die Abstandshalter 10 (Fig. 2) sind nach Aufbringung der Halterung 13 bspw. entfernt, können aber auch in dem Spalt 6 verbleiben.

Insbesondere weist die Halterung 13 eine M-Form auf. Ein erstes Ende der M-Form der Halterung 13 stellt den ersten Halterungspunkt 22 auf dem Bauteil 1 dar. Das zweite Ende der M-Form der Halterung 13 stellt einen dritten Befestigungspunkt 28 auf dem Bauteil 1 dar. In der Mitte der M-Form ist die Halterung 13 an dem Halterungspunkt 25 mit dem Füllkörper 7 befestigt.

Durch die M-Form der Halterung 13 wird ein offener Hohlraum 19 unter den M-Schenkeln der M-Form erzeugt. Dadurch ist der Spalt 6 auch unter der Halterung 13 frei zugänglich.

Um den Füllkörper 7 mit dem Bauteil 1 zu befestigen, stehen verschiedene Befestigungsverfahren zur Auswahl. Dies sind zum Beispiel Schweißen, Lasern oder Elektronenstrahlen-Schweißen sowie Lötverfahren.

Figur 4 zeigt beispielhaft die Vorgehensweise für ein Lötverfahren.

Insbesondere in der Nähe des Spalts 6 wird ein Lötmaterial 16 bspw. in Form von Lötpaste oder Lötpulver aufgebracht. In einem Lötprozess wird das Lötmaterial 16 aufgeschmolzen und dringt in die Spalte 6 ein und füllt sie vollständig aus. Auch kann ein Hohlvolumen zwischen Füllkörper 7 und Boden 5, falls ein von null verschiedener Abstand d zwischen Füllkörper 7 und Boden 5 vorhanden ist, mit dem Lötmaterial ausgefüllt werden.

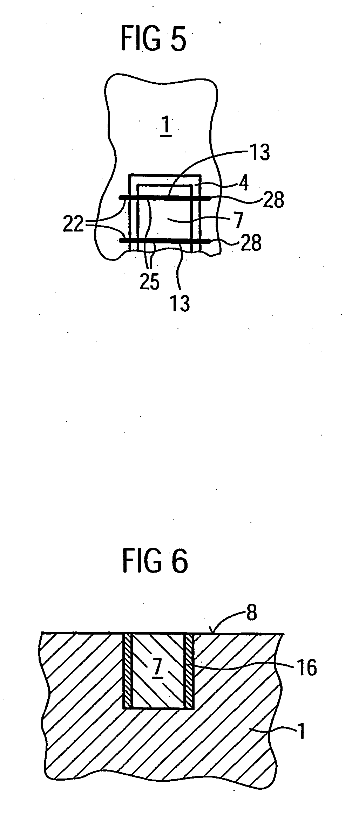

Figur 5 zeigt eine Aufsicht auf ein Bauteil 1 gemäß Figur 3. Die Aufsicht zeigt, dass zwei Halterungen 13 verwendet werden, um den Füllkörper 7 in der Nut 4 zu halten. Es können jedoch auch nur eine oder auch mehr als zwei Halterungen 13 verwendet werden.

Figur 6 zeigt ein Bauteil 1, das mit dem erfindungsgemäßen Verfahren hergestellt worden ist.

Nach einem beispielhaft verwendeten Lötvorgang oder nach einem sonstigen Befestigungsverfahren ist eine Verbindungsschicht 16 oder Lötschicht 16 zwischen dem Füllkörper 7 und dem Bauteil 1 in dem ehemals vorhandenen Spalt 6 entstanden. Somit wird eine feste Verbindung zwischen dem Füllkörper 7 und dem Bauteil 1 erzeugt. Überschüssiges Lötmaterial an der Oberfläche 8 und die zumindest eine Halterung 13 werden in einem letzten Verfahrensschritt, beispielsweise durch Schleifen, entfernt.

Wenn der Füllkörper 7 in der Nut 4 angeschweißt wird, so kann je nach Schweigverfahren nur eine teilweise Verbindung zwischen den Füllkörper 7 und dem Bauteil 1 an den Stellen erzeugt werden, wo die Halterung 13 nicht vorhanden ist. In diesem Fall wird an den zugänglichen Stellen eine Verbindung, Schweißnaht, erzeugt. Dadurch wird vorläufig eine ausreichend feste Verbindung zwischen Füllkörper 7 und dem Bauteil 1 erzeugt. Dann kann die zumindest eine Halterung 13 entfernt werden und der frei zugängliche Bereich des Spalts 6, der vorher unter der Haltung 13 verdeckt wurde, kann ebenfalls mittels Schweißen oder sonstiger Verbindungsverfahren mit einer Verbindungsschicht 16 versehen werden. Der Füllkörper 7 ist dann vollständig mit dem Bauteil verbunden.

Ein solches Verfahren kann beim Reparieren von Rissen eingesetzt werden.

## Patentansprüche

1. Verfahren zur Herstellung eines Bauteils (1),
das eine Oberfläche (8) aufweist,
wobei ein Füllkörper (7) mittels eines Befestigungsverfahrens mit dem Bauteil (1) fest verbunden wird,
wobei zumindest eine Halterung (13) den Füllkörper (7) mit dem Bauteil (1) zumindest zeitweise während des Befestigungsverfahrens von Füllkörper (7) und Bauteil (1) verbindet, und
wobei die zumindest eine Halterung (13) zumindest einen ersten Halterungspunkt (22) auf der Oberfläche (8) des Bauteils (1) und zumindest einen zweiten Halterungspunkt (25) auf den Füllkörper (7) aufweist **dadurch gekennzeichnet,**
**dass** die zumindest eine Halterung (13) nach der Befestigung von Füllkörper (7) und Bauteil (1) entfernt wird.

2. Verfahren nach Anspruch 1,
**dadurch gekennzeichnet , dass**
der Füllkörper (7) in eine Nut (4) des Bauteils (1) eingebracht wird, und
dass zwischen dem Füllkörper (7) und dem Bauteil (1) in der Nut (4) ein Spalt (6) vorhanden ist, in dem zumindest ein Abstandshalter (10) angeordnet ist.

3. Verfahren nach Anspruch 2,
**dadurch gekennzeichnet, dass**
der zumindest eine Abstandshalter (10) vor Anbringen der Halterung (13) in dem Spalt (6) angeordnet wird.

4. Verfahren nach Anspruch 1,
**dadurch gekennzeichnet , dass**
als Befestigungsverfahren von Füllkörper (7) und Bauteil (1) ein Lötverfahren verwendet wird.

5. Verfahren nach Anspruch 1,
**dadurch gekennzeichnet , dass**
als Befestigungsverfahren von Füllkörper (7) und Bauteil ein Schweißverfahren verwendet wird.

6. Verfahren nach Anspruch 1,
**dadurch gekennzeichnet , dass**
als Befestigungsverfahren von Füllkörper (7) und Bauteil ein Laserschweißverfahren verwendet wird.

7. Verfahren nach Anspruch 1,
**dadurch gekennzeichnet , dass**
als Befestigungsverfahren von Füllkörper (7) und Bauteil (1) ein Elektronenstrahlschweißverfahren verwendet wird.

8. Verfahren nach Anspruch 1,
**dadurch gekennzeichnet , dass**
zwei Halterungen (13) verwendet werden.

9. Verfahren nach Anspruch 1,
**dadurch gekennzeichnet , dass**
die Halterung (13) M-förmig ausgebildet ist.

10. Verfahren nach Anspruch 1 oder 9,
**dadurch gekennzeichnet , dass**
ein erstes Ende der M-Form der Halterung (13) an einem ersten Halterungspunkt (22) am Bauteil (1) befestigt ist,
dass die Mitte der M-Form der Halterung, (13) an einem zweiten Halterungspunkt (25) am Füllkörper (7) befestigt ist,
und dass ein zweites Ende der M-Form der Halterung (13) an einem dritten Halterungspunkt (28) am Bauteil (1) befestigt ist.

## Claims

1. Method for production of a component (1) which has a surface (8), a filling element (7) being firmly connected to the component (1) by means of a fixing method,
at least one holder (13) connecting the filling element (7) to the component (1) at least temporarily during the fixing method of the filling element (7) and component (1), and
the at least one holder (13) having at least a first holding point (22) on the surface (8) of the component (1) and at least a second holding point (25) on the filling element (7), **characterized**
**in that** the at least one holder (13) is removed after the filling element (7) and component (1) have been fixed.

2. Method according to Claim 1, **characterized**
**in that** the filling element (7) is introduced into a groove (4) in the component (1), and
**in that** between the filling element (7) and the component (1) in the groove (4) there is a gap (6) in which at least one spacer (10) is arranged.

3. Method according to Claim 2, **characterized**
**in that** the at least one spacer (10) is arranged in the gap (6) before the holder (13) is fitted.

4. Method according to Claim 1, **characterized**
**in that** the fixing method used for filling element (7) and component (1) is a soldering method.

5. Method according to Claim 1, **characterized**
**in that** the fixing method used for filling element (7) and component is a welding method.

6. Method according to Claim 1, **characterized**
**in that** the fixing method used for filling element (7) and component is a laser welding method.

7. Method according to Claim 1, **characterized**
**in that** the fixing method used for filling element (7) and component (1) is an electron beam welding method.

8. Method according to Claim 1, **characterized**
**in that** two holders (13) are used.

9. Method according to Claim 1, **characterized**
**in that** the holder (13) is M-shaped.

10. Method according to Claim 1 or 9, **characterized**
**in that** a first end of the M shape of the holder (13) is fixed to a first holding point (22) on the component (1),
**in that** the middle of the M shape of the holder (13) is fixed to a second holding point (25) on the filling element (7),
and **in that** a second end of the M shape of the holder (13) is fixed to a third holding point (28) on the component (1).

## Revendications

1. Procédé de production d'un élément (1) constitutif qui a une surface (8),
dans lequel un corps (7) de remplissage est relié solidement à l'élément (1) constitutif au moyen d'un procédé de fixation,
dans lequel au moins une fixation (13) relie le corps (7) de remplissage à l'élément (1) constitutif au moins de temps en temps pendant le procédé de fixation du corps (7) de remplissage et de l'élément (1) constitutif et dans lequel la au moins une fixation (13) a au moins un premier point (22) de fixation sur la surface (8) de l'élément (1) constitutif et au moins un deuxième point (25) de fixation sur le corps (7) de remplissage, **caractérisé**
**en ce que** l'on élimine la au moins une fixation (13) après la fixation du corps (7) de remplissage et de l'élément (1) constitutif.

2. Procédé suivant la revendication 1, **caractérisé en ce que**
on introduit le corps (7) de remplissage dans une rainure (4) de l'élément (1) constitutif et
il y a entre le corps (7) de remplissage et l'élément (1) constitutif dans la rainure (4) un intervalle (6) dans lequel est disposé au moins une entretoise (10)

3. Procédé suivant la revendication 2, **caractérisé en ce que**
la au moins une entretoise (10) est disposée dans l'intervalle (6) avant de mettre la fixation (13)

4. Procédé suivant la revendication 1, **caractérisé en ce que**
on utilise un procédé de brasage comme procédé de fixation du corps (7) de remplissage et de l'élément (1) constitutif

5. Procédé suivant la revendication (1), **caractérisé en ce que**
on utilise un procédé de soudage comme procédé de fixation du corps (7) de remplissage et de l'élément constitutif

6. Procédé suivant la revendication 1, **caractérisé en ce que**
on utilise un procédé de soudage laser comme procédé de fixation du corps (7) de remplissage et de l'élément (1) constitutif

7. Procédé suivant la revendication 1, **caractérisé en ce que**
on utilise un procédé de soudage par faisceaux d'électrons comme procédé de fixation du corps (7) de remplissage et de l'élément (1) constitutif

8. Procédé suivant la revendication 1, **caractérisé en ce que** l'on utilise deux fixations (13)

9. Procédé suivant la revendication 1, **caractérisé en ce que**
la fixation (13) est en forme de M

10. Procédé suivant la revendication 9, **caractérisé en ce que**
on fixe une première extrémité de la forme en M de la fixation (13) sur un premier point (22) de fixation sur l'élément (1) constitutif,
**en ce que** l'on fixe le milieu de la forme en M de la fixation (13) sur un deuxième point de la fixation sur le corps (7) de remplissage,
et **en ce que** l'on fixe une deuxième extrémité de la forme en M de la fixation (13) sur un troisième point (28) de fixation sur l'élément (1) constitutif.
